# EUROPEAN PATENT SPECIFICATION

(11) **EP 3 447 991 B1**
(45) Date of publication and mention of the grant of the patent: **22.01.2020**
(21) Application number: 17844610.0
(22) Date of filing: 13.07.2017
(51) Int. Cl.: H04L 29/06, H04N 21/438, H04N 21/442, H04N 21/2387

(54) **STREAMING MEDIA LIVE BROADCAST METHOD, SYSTEM, AND APPARATUS**
VERFAHREN, SYSTEM UND VORRICHTUNG FÜR LIVE-RUNDFUNK VON STREAMING-MEDIEN
PROCÉDÉ, SYSTÈME ET APPAREIL DE DIFFUSION EN DIRECT DE CONTENU MULTIMÉDIA EN CONTINU

(30) Priority: 19.06.2017 CN 201710469462
(43) Date of publication of application: 27.02.2019
(73) Proprietor: Wangsu Science & Technology Co., Ltd., Shanghai 200030 (CN)
(72) Inventor: LU, Meihui, Shanghai 200030 (CN); CHEN, Hong, Shanghai 200030 (CN); LV, Shibiao, Shanghai 200030 (CN)
(74) Representative: Hanna Moore + Curley
(86) International application number: PCT/CN2017/092834
(87) International publication number: WO 2018/232800

(56) References cited:
- CN-A- 1 691 590
- CN-A- 101 841 691
- CN-A- 102 088 396
- CN-A- 104 145 459
- US-B2- 8 094 557
- PIANESE F ET AL: "PULSE: An Adaptive, Incentive-Based, Unstructured P2P Live Streaming System", IEEE TRANSACTIONS ON MULTIMEDIA, IEEE SERVICE CENTER, PISCATAWAY, NJ, US, vol. 9, no. 8, 1 December 2007 (2007-12-01), pages 1645-1660, XP011346489, ISSN: 1520-9210, DOI: 10.1109/TMM.2007.907466

## Description

### FIELD OF THE DISCLOSURE

The present disclosure generally relates to the field of Internet technology and, more particularly, to alive streaming method, and an apparatus and system thereof.

### BACKGROUND

Streaming media refers to a media format for online playback in a streaming transmission way. Streaming media characterized by simultaneously transmitting and playback allows more real-time and convenient content playback, which has been widely used.

The current streaming media technology is divided into live streaming and on-demand streaming. For the existing live streaming, the complex environment of the Internet may cause many errors in the live streaming transmission, for example, may cause frames to be dropped/lost in live streams, which makes the latency of the source for live streaming getting lower and lower. In the existing technologies, the playback terminal cannot perceive that there are dropped frames in live streams, which causes the playback cache to become smaller and smaller, and the play position to become more and more front. As such, the playback is frequently stopped on the playback terminal, and the user experience is poor.

Pianese F el al: "PULSE: An Adaptive, Incentive-Based, Unstructured P2P Live Streaming System", IEEE TRANSACTIONS ON MULTIMEDIA, vol. 9, no.8, 1 December 2007, pages 1645-1660, discloses an unstructured mesh-based P2P system designed to support live streaming to large audiences under arbitrary resource availability.

### SUMMARY

In order to solve the problem of existing technologies, one aspect of the present disclosure provides a live streaming method according to claim 1.

Furthermore, the determining whether the first request for the resource slice within the delay window is successful includes: configuring a counter for accumulating the number of consecutive failures of the first request; obtaining a response status code of the first request for the resource slice within the delay window; and based on the response status code of the first request for the resource slice, identifying whether the request for the resource slice is successful.

Furthermore, the accumulating a number of consecutive failures of the first request for the resource slice within the delay window and, when the number of consecutive failures reach a preset threshold, sliding the delay window to limit a requesting speed of the playback terminal includes: based on the response status code of the first request for the resource slice, identifying whether the first request for the resource slice is successful; when the response status code indicates that the first request is failed, incrementing a value of the counter by one; continuously requesting the resource slice within the range of the delay window to accumulate the number of consecutive failures of the first request for the resource slice within the delay window; when the value of the counter reaches the preset threshold, sliding backward the delay window to limit the requesting speed of the playback terminal; and when the response status code indicates that the first request is successful, setting the value of the counter to zero.

Furthermore, the sliding the delay window to limit the requesting speed of the playback terminal includes: sliding the delay window backward by one unit-of-time; and setting the value of the counter to zero.

Furthermore, before initializing the delay window, the method further includes: slicing a streaming media by a server according to a time interval of one unit-of-time into resource slices; and numbering the resource slices, wherein the resource slices are slices of the streaming media.

Furthermore, the slicing a target streaming media resource and numbering the resource slices further includes: numbering the resource slices according to respective timestamps of the resource slices.

Furthermore, the initializing the delay window includes: obtaining a delay parameter; setting a size of the delay window according to the delay parameter; according to the size of the delay window, obtaining a starting number and a latest number of the target streaming media resource from a server terminal; and periodically maintaining the delay window.

Another aspect of the present disclosure provides a live streaming system according to claim 8.

Furthermore, the determination further includes: a counter configured to accumulate the number of consecutive failures of the first request; a status code acquisition module configured to obtain a response status code of the first request for the resource slice of the delay window; and a status code identification and process module configured to, based on the response status code of the first request for the resource slice, identify whether the request for the resource slices is successful, wherein, when the response status code indicates that the request is failed, the value of the counter is incremented by one; continuously requesting the resource slice within the range of the delay window to accumulate the number of consecutive failures of the first request for the resource slice within the delay window; when the value of the counter reaches the preset threshold, sliding backward the delay window to limit the requesting speed of the playback terminal; and when the response status code indicates that the first request is successful, setting the value of the counter to zero.

Furthermore, the live streaming system further includes a delay process unit, the delay process unit configured to, when the value of the counter reaches the preset threshold, slide backward the delay window by one unit-of-time and set the value of the counter to zero.

Furthermore, the live streaming system further includes a slicing unit, the slicing unit being arranged at the server terminal, and configured to slice a streaming media resource according to a time interval of one unit-of-time into resource slices.

Furthermore, the live streaming system further includes a slice numbering unit, the slice numbering unit being arranged at the server terminal, configured to number resource slices according to respective timestamps of the resource slices.

Furthermore, the live streaming system further includes a delay window initialization unit, the delay window initialization unit configured to initialize the delay window; obtain a delay parameter; set a size of the delay window according to the delay parameter; according to the size of the delay window, obtain a starting number and a latest number of the target streaming media resource from the server terminal; and periodically maintain the delay window.

Another aspect of the present disclosure provides a live streaming apparatus according to claim 14.

Therefore, the technical solution provided by the present disclosure is as followings. After initializing a delay window, through detecting a response status code of resource slice within the range of the delay window, the response status code is identified, and a number of consecutive failures of the first request for the resource slice within the delay window is accumulated. When the number of consecutive failures reaches a preset threshold, a system identifies a downloading delay of the resource. Thus, the delay window is slid to limit a requesting speed of the playback terminal. As such, the situation that a playback terminal frequently sends request to a server without a successful response, which causes the playback to frequently stop on the playback terminal, can be avoid. The user experience is enhanced.

### BRIEF DESCRIPTION OF THE DRAWINGS

In order to provide a clear illustration of technical schemes according to various disclosed embodiments, the drawings used in the description of the disclosed embodiments are briefly described below. Obviously, the following drawings are merely some of embodiments of the disclosure. Other drawings may be obtained based on the disclosed drawings by those skilled in the art without creative efforts.
FIG. 1 is a flow chart of a method for slicing and numbering streaming media resource at a server terminal according to a first embodiment of the present invention;
FIG. 2 is a flow chart of a method for live streaming according to the first embodiment of the present invention;
FIG. 3 is a flow chart of sub steps of step S205 according to the first embodiment of the present invention;
FIG. 4 is a flow chart of sub steps of step S206 according to the first embodiment of the present invention;
FIG. 5 is a functional block diagram of a live streaming system according to a second embodiment of the present invention; and
FIG. 6 is a functional block diagram of a live streaming apparatus according to a third embodiment of the present invention.

### DETAILED DESCRIPTION

In order to provide a more clear understanding of the objectives, technical aspects, and advantages of the embodiments of the present disclosure, embodiments of the present disclosure are described in detail in connection with the drawings.

### The First Embodiment

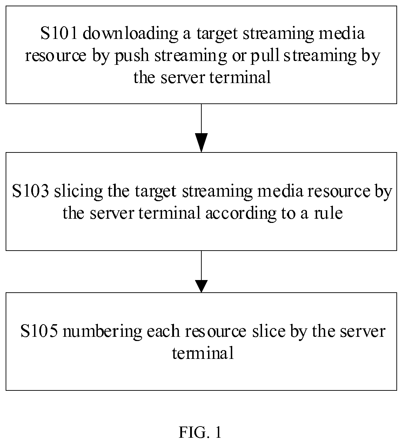

The present disclosure provides a method for live streaming as shown in FIG. 1. FIG. 1 is a flow chart of a method for slicing and numbering streaming media resource at a server terminal, which including the following steps.

S101, downloading a target streaming media resource by push streaming or pull streaming by the server terminal.

S103, slicing the target streaming media resource by the server terminal according to a rule to make the streaming media resource exist in the form of resource slices.

Specifically, for example, the slicing may be performed at a time interval of one unit-of-time. The time interval of the unit-of-time refers to a time interval between timestamps of the streaming media resource slices.

S105, numbering each resource slice by the server terminal.

Specifically, an objective of numbering the resource slices is to distinguish and identify the resource slices with different timestamps. Thus, when a system reads a numbered resource slice, in order to identify the timestamp corresponding to the numbered resource slice, the resource slices may be numbered according to the respective timestamps of the resource slices. For example, the number may start from 0 or an initial value, and then increment at the time interval of the unit-of-time as a next resource slice number. As such, the number of the resource slice is just the timestamp of the resource slice. Furthermore, the resource slices may be numbered using a natural number. In order to associate the number of the resource slice with the timestamp of the corresponding resource slice, a mapping table or a mathematical relationship between the number of the resource slice and the timestamp of the corresponding resource slice can be established. The timestamp of the resource slice corresponding to the number of the resource slice can be read by conversion or looking up the mapping table.

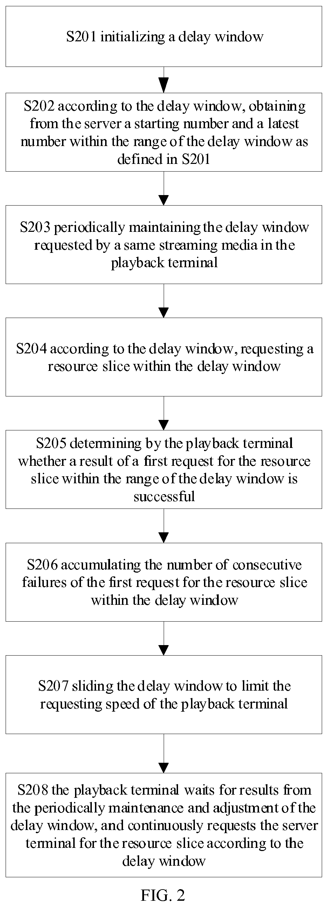

FIG. 2 is a flow chart of a method for live streaming according to the present embodiment. The method for live streaming includes the following steps.

S201, initializing a delay window;

Specifically, a player being arranged at a playback terminal may obtain a delay parameter, and sets the size of the delay window according to the delay parameter.

S202, according to the delay window, obtaining from the server a starting number and a latest number within the range of the delay window as defined in S201.

Specifically, when the playback terminal starts, the delay window is initialized according to the delay parameter. That is, the playback terminal obtains the starting number and the latest number of the streaming media resource from the server terminal. Herein, the starting number is the number of the slice in a play starting position of the streaming media resource. The latest number is the number of the resource slice counted from the starting position, for spacing the resource slices of the delay parameter.

S203, periodically maintaining the delay window requested by a same streaming media in the playback terminal.

Specifically, the delay window is used to constrain the range of resource slices that can be obtained from the server terminal by the playback terminal. Thus, as the playback terminal plays the resource slices that have been requested in a chronological order, the playback terminal needs to continually request for the resource slices that have not been played in the delay window, which causes the system to push the delay window to slide forward. That is, the starting number and the latest number are increased synchronously, so that the playback terminal can continuously obtain from the delay window the number of resource that have not been requested. Preferably, the system can set a timer to regularly start increasing the starting number and the latest number simultaneously by a unit-of-time within the range of the delay window.

S204, according to the delay window, requesting the resource slice within the delay window.

Specifically, according to the starting number and the latest number defined by the delay window, the playback terminal may exclude a record of a resource slice that has been successfully requested, and may obtain the number of the next resource slice that has not been successfully requested. The playback terminal may then request the server terminal for the resource slice according to the number of the resource slice that has not been successfully requested.

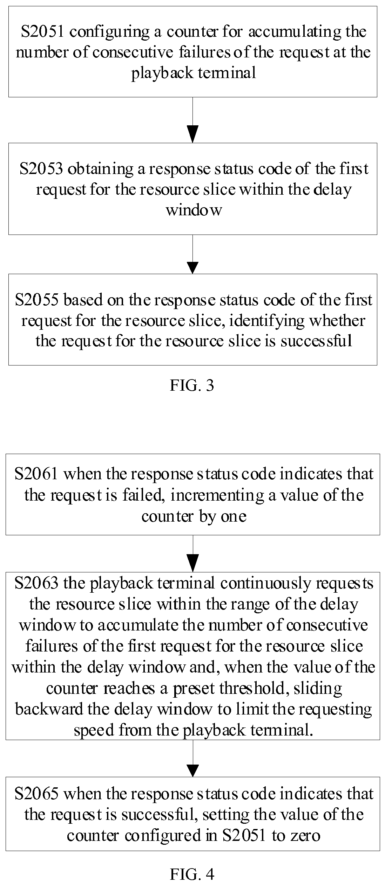

As shown in FIG. 3, S205, determining by the playback terminal whether a result of a first request for a resource slice within the range of the delay window is successful.

Specifically, determining by the playback terminal whether the result of the first request for the resource slice within the range of the delay window is successful includes the following steps.

S2051, configuring a counter for accumulating the number of consecutive failures of the request on the playback terminal.

S2053, obtaining a response status code of the first request for the resource slice within the delay window.

S2055, based on the response status code of the first request for the resource slice, identifying whether the request for the resource slice is successful.

Specifically, when the response status code of the first request for the resource slice is 200, the first request for the resource slice is considered successful. When the response status code of the first request for the resource slice is 404, the first request for the resource slice is considered to fail. Of course, in addition to the status code 404, there may be other response status codes indicate that the request is failed. For example, when a content attribute of the requested resource cannot satisfy a condition in a request header, consequently the response status code 406 in response to a response entity cannot be generated; or when the server rejects to process a current request, the response status code is 413, and the like.

As shown in FIG. 4, S206, accumulating the number of consecutive failures of the first request for the resource slice within the delay window.

Specifically, accumulating the number of consecutive failures of the first request for the resource slice within the delay window includes the following steps.

S2061, when the response status code indicates that the request is failed, incrementing the value of the counter by one. Specifically, according to the response status code of the first request for the resource slice as described in S2055, identifying whether the request for the resource slice is successful, when the response status code indicates that the request is failed, the value of the counter configured in S2051 is incremented by one.

S2063, the playback terminal continuously requests the resource slice within the range of the delay window to accumulate the number of consecutive failures of the first request for the resource slice within the delay window and, when the value of the counter reaches a preset threshold, sliding backward the delay window to limit the requesting speed from the playback terminal.

Specifically, S2063 includes the following steps.

Step 1, the playback terminal continuously requests the resource slice within the range of the delay window, where the resource slice may be the resource slice for which the first request is failed or the resource slice which has not been requested.

Step 2, when the response status code of the first request for a next resource slice that has not been requested still indicates that the request is failed, incrementing the value of the counter configured in S2051 by one.

Step 3, determining whether the value of the counter configured in S2051 reaches the preset threshold, where the preset threshold is the value of dropped frames which can be tolerated according to a previous playback experience. When the value of the counter configured in S2051 reaches the preset threshold, the playback terminal may consider that a delay phenomenon occurs in the playing environment at this time. That is, the server terminal cannot timely respond to the request from the playback terminal. When the value of the counter configured in S2051 does not reach the preset threshold, steps 1 to 3 are cyclically performed.

S2065, when the response status code indicates that the request is successful, setting the value of the counter configured in S2051 to zero.

S207, sliding the delay window to limit the requesting speed of the playback terminal includes the following steps.

Firstly, sliding the delay window backward by one unit-of-time.

Specifically, at each time when the playback terminal recognizes that the playing environment has the delay phenomenon, the starting number and the latest number in a current delay window are decreased by the unit-of-time at the same time.

Then, setting the value of the counter configured in S2051 to zero.

S208, the playback terminal waits for results from the periodically maintenance and adjustment of the delay window, and continuously requests the server terminal for the resource slice according to the delay window.

### The Second Embodiment

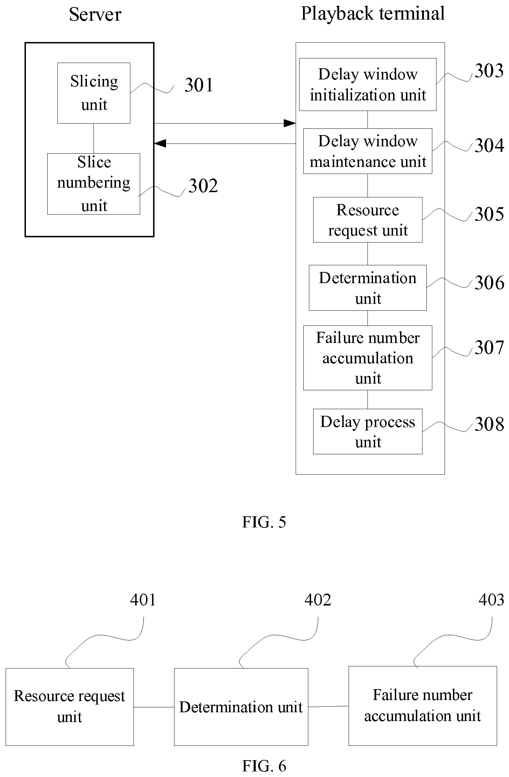

The present disclosure also provides a live streaming system as shown in FIG. 5. FIG. 5 is a functional block diagram of the live streaming system according to the second embodiment of the present disclosure.

The live streaming system includes a playback terminal and a server terminal. The living streaming system also includes the following units.

A slicing unit 301 is arranged at the server terminal to slice a streaming media resource according to a time interval of one unit-of-time.

A slice numbering unit 302 is arranged at the server terminal to number resource slices according to timestamps of the resource slices.

Specifically, slice numbering unit 302 numbers the resource slices according to the timestamps of the resource slices. For example, the number may start from 0 or an initial value, and then increment at the time interval of the unit-of-time as a next resource slice number. As such, the number of the resource slice is just the timestamp of the resource slice. Furthermore, the resource slices may be numbered using a natural number. In order to associate the number of the resource slice with the timestamp of the corresponding resource slice, a mapping table or a mathematical relationship between the number of the resource slice and the timestamp of the corresponding resource slice can be established. The timestamp of the resource slice corresponding to the number of the resource slice can be read by conversion or looking up the mapping table.

A delay window initialization unit 303 is arranged at the playback terminal. The delay window initialization unit 303 obtains a delay parameter according to requirements of the playback business to set the size of the delay window according to the delay parameter. When the playback terminal starts, the delay window is initialized according to the delay parameter. That is, the playback terminal obtains the starting number and the latest number of the streaming media resource from the server terminal. Herein, the starting number is the number of the slice in a play starting position of the streaming media resource. The latest number is the number of the resource slice counted from the starting position for spacing the resource slices of the delay parameter.

A delay window maintenance unit 304 is configured to periodically maintain the delay window requested by a same streaming media in the playback terminal, which thereby causes the system to push the delay window to slide forward. That is, the starting number and the latest number are increased synchronously, so that the playback terminal can continuously obtain from the delay window the number of resource that have not been requested. Preferably, the system can set a timer to regularly start increasing the starting number and the latest number simultaneously by a unit-of-time within the range of the delay window.

A resource request unit 305 is configured to, according to the initialized delay window, request the server terminal for the resource slices within the delay window.

Specifically, according to the starting number and the latest number defined by the delay window, the playback terminal may exclude a record of a resource slice that has been successfully requested, and may obtain the number of the next resource slice that has not been successfully requested. The playback terminal may then request the server terminal for the resource slice according to the number of the resource slice that has not been successfully requested.

A determination unit 306 is configured to determine whether a result of a first request for a resource slice within the range of the delay window is successful.

The determination unit 306 further includes a counter configured to accumulate a number of consecutive failures of the first request; a status code acquisition module configured to obtain a response status code of the first request for the resource slice of the delay window; and a status code identification and process module configured to, based on the response status code of the first request for the resource slice, identify whether the request for the resource slice is successful.

A failure number accumulation unit 307 is configured to accumulate a number of consecutive failures of the first request for the resource slices within the delay window.

Specifically, when the response status code indicates that the request is failed, the value of the counter is incremented by one, and continuously requests the resource slice within the range of the delay window to accumulate the number of consecutive failures of the first request for the resource slice in the delay window.

Furthermore, when the response status code indicates that the request is successful, the value of the counter configured in S2051 is set to zero.

A delay process unit 308 is configured, when the value of the counter reaches a preset threshold, to slide backward the delay window with one unit-of-time and to set the counter to zero.

Specifically, at each time when the playback terminal recognizes that the playing environment has the delay phenomenon, the starting number and the latest number in a current delay window are decreased by the unit-of-time at the same time.

### The Third Embodiment

As shown in FIG. 6, the embodiment of the present disclosure also provides a live streaming apparatus including a resource request unit 401, a determination unit 402, and a failure number accumulation unit 403. The resource request unit 401 is configured, according to the delay window, to request the resource slices within the delay window. The determination unit 402 is configured to determine whether a result of a first request for a resource slice within the range of the delay window is successful. The failure number accumulation unit 403 is configured to accumulate a number of consecutive failures of the first request for the resource slice in the delay window and, when the number of consecutive failures reaches a preset threshold, to slide the delay window to limit a requesting speed of the playback terminal.

The sequence numbers of the disclosed embodiments are merely for the sake of description, and do not represent the advantages and disadvantaged of the embodiments.

Therefore, the technical solution provided by the present disclosure is as followings. After initializing a delay window, through detecting a response status code of resource slice within the range of the delay window, the response status code is identified, and a number of consecutive failures of the first request for the resource slice within the delay window is accumulated. When the number of consecutive failures reaches a preset threshold, a system identifies a downloading delay of the resource. Thus, the delay window is slid backward to limit a requesting speed. As such, the situation that a playback terminal frequently sends request to a server without a successful response, which causes the playback to frequently stop on the playback terminal, can be avoid. Furthermore, the system periodically maintains the delay window to slide forward, which ensures an update speed of the numbering request from the playback terminal. Thus, it can avoid that the playback is frequently stopped on the playback terminal, and the user experience is enhanced.

Each of the embodiments described in the specification is illustrated in a progressive manner, and the same or similar parts between various embodiments can be referenced with each other. Each embodiment is focused on the differences from other embodiments. In particular, for the embodiments of the apparatus, reference can be made to the explanation of the embodiments of the method described above.

The present invention may be described in the general context of computer-executable instructions executed by a computer, for example, program modules. Generally, the program modules include routines, programs, objects, components, and data structures that perform particular tasks or implement particular abstract data types. Aspects of the invention may also be practiced in distributed computing environments where tasks are performed by remote processing devices that are linked through a communications network. In a distributed computing environment, the program modules may be located in both local and remote computer storage media including memory storage devices.

The foregoing embodiments of the apparatus are merely illustrative, and the units described as separate components may or may not be physically separate, while the components illustrated as units may or may not be physical units, that is, they can be co-located or can be distributed onto a plurality of network elements. A part or all of the modules therein can be selected as required in practice to achieve the objective of the solution of the embodiments. Those ordinarily skilled in the art can appreciate and implement the solution of the embodiments without any inventive effort.

Through the description of the aforementioned embodiments, person in the art may clearly understand that the present disclosure may be realized in the form of software plus the necessary common hardware platform. Based on this understanding, the aforementioned technical solution, in essence, or in the form of a contribution to the prior art, or part of thereof, can be embodied in the form of a software product. The computer software product may be stored on a computer-readable media, such as a ROM/RAM, a magnetic disk, or an optical disk, and the like. The computer software product may include a certain number of computer-executable instructions that make a computer device (such as a personal computer, a server, or a network equipment) to execute the methods described in each embodiment, or certain portions of the embodiments, of the present disclosure.

## Claims

1. A method for live streaming, comprising:
initializing (S201), by a playback terminal, a delay window being used to constrain a range of resource slices obtained from a server terminal by the playback terminal, wherein the resource slices are obtained by slicing a target streaming media resource by the server terminal;
according to a starting number and a latest number of the resource slices within the delay window, requesting (S204), by the playback terminal, an unrequested resource slice of the target streaming media resource from the server terminal within a range of the delay window;
determining (S205), by the playback terminal, whether a result of a first request for the resource slice within the range of the delay window is successful; and
accumulating (S206), by the playback terminal, a number of consecutive failures of the first request for the resource slice within the delay window and, when the number of consecutive failures reaches a preset threshold, sliding (S207) the delay window backward, by decreasing the starting number and the latest number, to limit a requesting speed of the playback terminal.

2. The method for live streaming according to claim 1, wherein the determining, by the playback terminal, whether the first request for the resource slice within the delay window is successful includes:
configuring (S2051) a counter for accumulating the number of consecutive failures of the first request;
obtaining (S2053) a response status code of the first request for the resource slice within the delay window; and
based on the response status code of the first request for the resource slice, identifying (S2055) whether the request for the resource slice is successful.

3. The method for live streaming according to claim 2, wherein the accumulating a number of consecutive failures of the first request for the resource slice within the delay window and, when the number of consecutive failures reaches a preset threshold, sliding the delay window backward to limit a requesting speed of the playback terminal includes:
based on the response status code of the first request for the resource slice, identifying whether the first request for the resource slice is successful;
when the response status code indicates that the first request is failed, incrementing (S2061) a value of the counter by one;
continuously requesting (S208; S2063) the resource slice within the range of the delay window to accumulate the number of consecutive failures of the first request for the resource slice within the delay window;
when the value of the counter reaches the preset threshold, sliding backward the delay window to limit the requesting speed of the playback terminal; and
when the response status code indicates that the first request is successful, setting (S2065) the value of the counter to zero.

4. The method for live streaming according to claim 3, wherein the sliding the delay window backward to limit the requesting speed of the playback terminal includes:
sliding the delay window backward by one unit-of-time, by decreasing the starting number and the latest number by the unit-of-time; and
setting the value of the counter to zero.

5. The method for live streaming according to any one of claims 1 to 4, before initializing the delay window, the method further including:
slicing, by the server terminal, the target streaming media resource according to a time interval of one unit-of-time into the resource slices; and
numbering, by the server terminal, the resource slices.

6. The method for live streaming according to claim 5, wherein the slicing, by the server terminal, the target streaming media resource and numbering the resource slices further includes:
numbering the resource slices according to respective timestamps of the resource slices.

7. The method for live streaming according to claim 5, wherein the initializing, by a playback terminal, the delay window includes:
obtaining a delay parameter;
setting a size of the delay window according to the delay parameter;
according to the size of the delay window, obtaining the starting number and the latest number of the resource slices from the server terminal; and
periodically maintaining the delay window to increase the starting number and the latest number of the resource slices synchronously.

8. A live streaming system including a playback terminal and a server terminal, and further including a resource request unit (305), a determination unit (306), and a failure number accumulation unit (307), and the resource request unit, the determination unit, and the failure number accumulation unit being arranged at the playback terminal, wherein:
the resource request unit is configured to request (S204) an unrequested resource slice of a target streaming media resource from the server terminal within an initialized delay window according to a starting number and a latest number of resource slices within the initialized delay window, wherein the delay window is used to constrain a range of the resource slices obtained from the server terminal by the playback terminal, and the resource slices are obtained by slicing the target streaming media resource by the server terminal;
the determination unit is configured to determine (S205) whether a result of a first request for the resource slice within the range of the delay window is successful; and
the failure number accumulation unit is configured to accumulate (S206) a number of consecutive failures of the first request for the resource slice within the delay window and, when the number of failures reaches a preset threshold, slide (S207) the delay window backward, by decreasing the starting number and the latest number, to limit a requesting speed of the playback terminal.

9. The live streaming system according to claim 8, the determination unit further including:
a counter configured to accumulate the number of consecutive failures of the first request;
a status code acquisition module configured to obtain a response status code of the first request for the resource slice of the delay window; and
a status code identification and process module configured to, based on the response status code of the first request for the resource slice, identify whether the request for the resource slice is successful, wherein:
when the response status code indicates that the request is failed, the value of the counter is incremented by one;
continuously requesting the resource slice within the range of the delay window to accumulate the number of consecutive failures of the first request for the resource slice within the delay window;
when the value of the counter reaches the preset threshold, sliding backward the delay window to limit the requesting speed of the playback terminal; and
when the response status code indicates that the first request is successful, setting the value of the counter to zero.

10. The live streaming system according to claim 9, further including
a delay process unit (308) configured to, when the value of the counter reaches the preset threshold, slide backward the delay window by one unit-of-time, by decreasing the starting number and the latest number by the unit-of-time, and set the value of the counter to zero.

11. The live streaming system according to claim 8, further including:
a delay window initialization unit (303) configured to initialize the delay window, wherein: the delay window initialization unit is specifically configured to obtain a delay parameter; and to set a size of the delay window according to the delay parameter, according to the size of the delay window, the playback terminal is configured to obtain the starting number and the latest number of the resource slices from the server terminal, and a delay window maintenance unit is configured to periodically maintain the delay window to increase the starting number and the latest number of the resource slices synchronously.

12. The live streaming system according to claim 8, further including:
a slicing unit (301) being arranged at the server terminal, and configured to slice the target streaming media resource according to a time interval of one unit-of-time into the resource slices.

13. The live streaming system according to claim 12, further including:
a slice numbering unit (302) being arranged at the server terminal, configured to number the resource slices according to respective timestamps of the resource slices.

14. Alive streaming apparatus including a resource request unit (305, 401), a determination unit (306, 402), and a failure number accumulation unit (307, 403), wherein,
the resource request unit (305, 401) is configured to, according to a starting number and a latest number of resource slices within an initialized delay window, request an unrequested resource slice of a target streaming media resource from a server terminal within the delay window being used to constrain a range of the resource slices obtained from the server terminal by the playback terminal, wherein the resource slices are obtained by slicing the target streaming media resource by the server terminal;
the determination unit (306, 402) is configured to determine whether a result of a first request for the resource slice within the range of the delay window is successful; and
the failure number accumulation unit (307, 403) is configured to accumulate a number of consecutive failures of the first request for the resource slice within the delay window and, when the number of consecutive failures reaches a preset threshold, slide the delay window backward, by decreasing the starting number and the latest number, to limit a requesting speed of a playback terminal.

15. The live streaming apparatus according to claim 14, wherein the live streaming apparatus is a live streaming playback terminal.

## Patentansprüche

1. Verfahren zum Live-Streaming, umfassend:
Initialisieren (S201), vonseiten eines Wiedergabe-Terminals, eines Verzögerungsfensters, das zum Einschränken eines Bereichs von Ressourcen-Slices verwendet wird, die von einem Server-Terminal vonseiten des Wiedergabeterminals erhalten werden, wobei die Ressourcen-Slices durch Slicing einer Ziel-Streaming-Medienressource vonseiten des Server-Terminals erhalten werden;
gemäß einer Anfangsnummer und einer letzten Nummer der Ressourcen-Slices innerhalb des Verzögerungsfensters, Anfordern (S204), vonseiten des Wiedergabe-Terminals, eines nicht angeforderten Ressourcen-Slices der Ziel-Streaming-Medienressource vom Server-Terminal innerhalb eines Bereichs des Verzögerungsfensters;
Bestimmen (S205), vonseiten des Wiedergabe-Terminals, ob ein Ergebnis einer ersten Anforderung von dem Ressourcen-Slice innerhalb des Bereichs des Verzögerungsfensters erfolgreich ist; und
Akkumulieren (S206), vonseiten des Wiedergabe-Terminals, einer Anzahl von aufeinanderfolgenden Fehlern der ersten Anforderung von den Ressourcen-Slices innerhalb des Verzögerungsfensters und, wenn die Anzahl der aufeinanderfolgenden Fehler eine voreingestellte Schwelle erreicht, Verschieben (S207) des Verzögerungsfensters nach hinten, indem die Anfangsnummer und die letzte Nummer verringert werden, um eine Anforderungsgeschwindigkeit des Wiedergabe-Terminals zu begrenzen.

2. Verfahren zum Live-Streaming nach Anspruch 1, wobei das Bestimmen, vonseiten des Wiedergabe-Terminals, ob die erste Anforderung von dem Ressourcen-Slice innerhalb des Verzögerungsfensters erfolgreich ist, umfasst:
Konfigurieren (S2051) eines Zählers zum Akkumulieren der Anzahl der aufeinanderfolgenden Fehler der ersten Anforderung;
Erhalten (S2053) eines Rückmeldestatus-Codes der ersten Anforderung von dem Ressourcen-Slice innerhalb des Verzögerungsfensters; und
aufgrund des Rückmeldestatus-Codes der ersten Anforderung von dem Ressourcen-Slice, Feststellen (S2055), ob die Anforderung von dem Ressourcen-Slice erfolgreich ist.

3. Verfahren zum Live-Streaming nach Anspruch 2, wobei das Akkumulieren einer Anzahl von aufeinanderfolgenden Fehlern der ersten Anforderung von dem Ressourcen-Slice innerhalb des Verzögerungsfensters und, wenn die Anzahl der aufeinanderfolgenden Fehler eine voreingestellte Schwelle erreicht, das Verschieben des Verzögerungsfensters nach hinten, um eine Anforderungsgeschwindigkeit des Wiedergabe-Terminals zu begrenzen, umfasst:
aufgrund des Rückmeldestatus-Codes der ersten Anforderung von dem Ressourcen-Slice, Feststellen ob die erste Anforderung von dem Ressourcen-Slice erfolgreich ist;
wenn der Rückmeldestatus-Code anzeigt, dass die erste Anforderung fehlgeschlagen ist, Erhöhen (S2061) eines Werts des Zählers um eins;
kontinuierliches Anfordern (S208; S2063) von dem Ressourcen-Slice innerhalb des Bereichs des Verzögerungsfensters, um die Anzahl der aufeinanderfolgenden Fehler der ersten Anforderung von dem Ressourcen-Slice innerhalb des Verzögerungsfensters zu akkumulieren;
wenn der Wert des Zählers die voreingestellte Schwelle erreicht, Verschieben des Verzögerungsfensters nach hinten, um die Anforderungsgeschwindigkeit des Wiedergabe-Terminals zu begrenzen; und
wenn der Rückmeldestatus-Code anzeigt, dass die erste Anforderung erfolgreich ist, Einstellen (S2065) des Werts des Zählers auf null.

4. Verfahren zum Live-Streaming nach Anspruch 3, wobei das Verschieben des Verzögerungsfensters nach hinten, um die Anforderungsgeschwindigkeit des Wiedergabe-Terminals zu begrenzen, umfasst:
Verschieben des Verzögerungsfensters um eine Zeiteinheit nach hinten, indem die Anfangsnummer und die letzte Nummer um eine Zeiteinheit verringert werden; und Stellen des Werts des Zählers auf null.

5. Verfahren zum Live-Streaming nach einem der Ansprüche 1 bis 4, wobei das Verfahren vor dem Initialisieren des Verzögerungsfensters ferner umfasst:
Slicing, vonseiten des Server-Terminals, der Ziel-Streaming-Medienressource gemäß einem Zeitintervall von einer Zeiteinheit in die Ressourcen-Slices; und
Nummerieren der Ressourcen-Slices vonseiten des Server-Terminals.

6. Verfahren zum Live-Streaming nach Anspruch 5, wobei das Slicing, vonseiten des Server-Terminals, der Ziel-Streaming-Medienressource und Nummerieren der Ressourcen-Slices ferner umfasst:
Nummerieren der Ressourcen-Slices gemäß jeweiliger Zeitstempel der Ressourcen-Slices.

7. Verfahren zum Live-Streaming nach Anspruch 5, wobei das Initialisieren, vonseiten des Wiedergabe-Terminals, des Verzögerungsfensters umfasst:
Erhalten eines Verzögerungsparameters;
Einstellen einer Größe des Verzögerungsfensters gemäß dem Verzögerungsparameter;
gemäß der Größe des Verzögerungsfensters, Erhalten der Anfangsnummer und der letzten Nummer der Ressourcen-Slices vom Server-Terminal; und
regelmäßiges Verwalten des Verzögerungsfensters, um die Anfangsnummer und die letzte Nummer der Ressourcen-Slices synchron zu erhöhen.

8. Live-Streaming-System, das ein Wiedergabe-Terminal und ein Server-Terminal umfasst und ferner eine Ressourcenanforderungseinheit (305), eine Bestimmungseinheit (306) und eine Fehleranzahl-Akkumulierungseinheit (307) umfasst, und wobei die Ressourcenanforderungseinheit, die Bestimmungseinheit und die Fehleranzahl-Akkumulierungseinheit am Wiedergabe-Terminal angeordnet sind, wobei:
die Ressourcenanforderungseinheit zum Anfordern (S204) eines nicht angeforderten Ressourcen-Slices einer Ziel-Streaming-Medienressource vom Server-Terminal innerhalb eines initialisierten Verzögerungsfensters gemäß einer Anfangsnummer und einer letzten Nummer von Ressourcen-Slices innerhalb des initialisierten Verzögerungsfensters konfiguriert ist, wobei das Verzögerungsfenster zum Einschränken eines Bereichs der Ressourcen-Slices verwendet wird, die vom Server-Terminal vonseiten des Wiedergabe-Terminals erhalten werden, und die Ressourcen-Slices durch Slicing der Ziel-Streaming-Medienressource vonseiten des Server-Terminals erhalten werden;
die Bestimmungseinheit zum Bestimmen (S205) konfiguriert ist, ob ein Ergebnis einer ersten Anforderung von dem Ressourcen-Slice innerhalb des Bereichs des Verzögerungsfensters erfolgreich ist; und
die Fehleranzahl-Akkumulierungseinheit zum Akkumulieren (S206) einer Anzahl aufeinanderfolgender Fehler der ersten Anforderung von dem Ressourcen-Slice innerhalb des Verzögerungsfensters und, wenn die Anzahl der Fehler eine voreingestellte Schwelle erreicht, zum Verschieben (S207) des Verzögerungsfensters nach hintern konfiguriert ist, indem die Anfangsnummer und die letzte Nummer verringert wird, um die Anforderungsgeschwindigkeit des Wiedergabe-Terminals zu begrenzen.

9. Live-Streaming-System nach Anspruch 8, wobei die Bestimmungseinheit ferner umfasst:
einen Zähler, der zum Akkumulieren der Anzahl der aufeinanderfolgenden Fehler der ersten Anforderung konfiguriert ist;
ein Erfassungsmodul für den Status-Code, das zum Erhalten eines Rückmeldestatus-Codes der ersten Anforderung von dem Ressourcen-Slice des Verzögerungsfensters konfiguriert ist; und
ein Feststellungs- und Prozess-Modul für den Status-Code, das konfiguriert ist, um aufgrund des Rückmeldestatus-Codes der ersten Anforderung von dem Ressourcen-Slice festzustellen, ob die Anforderung von dem Ressourcen-Slice erfolgreich ist, wobei:
wenn der Rückmeldestatus-Code anzeigt, dass die Anforderung fehlgeschlagen ist, der Wert des Zählers um eins erhöht wird;
das Ressourcen-Slice innerhalb des Bereichs des Verzögerungsfensters kontinuierlich angefordert wird, um die Anzahl der aufeinanderfolgenden Fehler der ersten Anforderung von dem Ressourcen-Slice innerhalb des Verzögerungsfensters zu akkumulieren;
wenn der Wert des Zählers die voreingestellte Schwelle erreicht, das Verzögerungsfensters nach hinten verschoben wird, um die
Anforderungsgeschwindigkeit des Wiedergabe-Terminals zu begrenzen; und
wenn der Rückmeldestatus-Code anzeigt, dass die erste Anforderung erfolgreich ist, der Wert des Zählers auf null eingestellt wird.

10. Live-Streaming-System nach Anspruch 9, ferner umfassend:
eine Verzögerungsprozesseinheit (308), die konfiguriert ist um, wenn der Wert des Zählers die voreingestellte Schwelle erreicht, das Verzögerungsfenster um eine Zeiteinheit nach hinten zu verschieben, indem die Anfangsnummer und die letzte Nummer um die Zeiteinheit verringert wird, und den Wert des Zählers auf null zu stellen.

11. Live-Streaming-System nach Anspruch 8, ferner umfassend:
eine Verzögerungsfenster-Initialisierungseinheit (303), die zum Initialisieren des Verzögerungsfensters konfiguriert ist, wobei: die Verzögerungsfenster-Initialisierungseinheit insbesondere zum Erhalten eines Verzögerungsparameters und zum Einstellen einer Größe des Verzögerungsfensters gemäß dem Verzögerungsparameter, gemäß der Größe des Verzögerungsfensters, konfiguriert ist, das Wiedergabe-Terminal zum Erhalten der Anfangsnummer und der letzten Nummer der Ressourcen-Slices vom Server-Terminal konfiguriert ist, und eine Verzögerungsfenster-Verwaltungseinheit zum regelmäßigen Verwalten des Verzögerungsfensters konfiguriert ist, um die Anfangsnummer und die letzte Nummer der Ressourcen-Slices synchron zu erhöhen.

12. Live-Streaming-System nach Anspruch 8, ferner umfassend:
eine Slicing-Einheit (301), die am Server-Terminal angeordnet und zum Slicing der Ziel-Streaming-Medienressource gemäß einem Zeitintervall von einer Zeiteinheit in die Ressourcen-Slices konfiguriert ist.

13. Live-Streaming-System nach Anspruch 12, ferner umfassend:
eine Slice- (302), die am Server-Terminal angeordnet ist, konfiguriert zum Nummerieren der Nummerierungseinheit Ressourcen-Slices gemäß jeweiliger Zeitstempel der Ressourcen-Slices.

14. Live-Streaming-Vorrichtung, die eine Ressourcenanforderungseinheit (305, 401), eine Bestimmungseinheit (306, 402) und eine Fehleranzahl-Akkumulierungseinheit (307, 403) umfasst, wobei
die Ressourcenanforderungseinheit (305, 401) konfiguriert ist, um gemäß einer Anfangsnummer und einer letzten Nummer von Ressourcen-Slices innerhalb eines initialisierten Verzögerungsfensters ein nicht angefordertes Ressourcen-Slice einer Ziel-Streaming-Medienressource von einem Server-Terminal innerhalb des Verzögerungsfensters anzufordern, das zum Einschränken eines Bereichs der Ressourcen-Slices verwendet wird, die vom Server-Terminal vonseiten des Wiedergabe-Terminals erhalten wird, wobei die Ressourcen-Slices durch Slicing der Ziel-Streaming-Medienressource vonseiten des Server-Terminals erhalten werden;
die Bestimmungseinheit (306, 402) zum Bestimmen konfiguriert ist, ob ein Ergebnis einer ersten Anforderung von dem Ressourcen-Slice innerhalb des Bereichs des Verzögerungsfensters erfolgreich ist; und
die Fehleranzahl-Akkumulierungseinheit (307, 403) zum Akkumulieren einer Anzahl aufeinanderfolgender Fehler der ersten Anforderung von dem Ressourcen-Slice innerhalb des Verzögerungsfensters und, wenn die Anzahl der aufeinanderfolgenden Fehler eine voreingestellte Schwelle erreicht, zum Verschieben des Verzögerungsfensters nach hintern konfiguriert ist, indem die Anfangsnummer und die letzte Nummer verringert wird, um die Anforderungsgeschwindigkeit eines Wiedergabe-Terminals zu begrenzen.

15. Live-Streaming-Vorrichtung nach Anspruch 14, wobei die Live-Streaming-Vorrichtung ein Live-Streaming-Wiedergabe-Terminal ist.

## Revendications

1. Procédé pour une diffusion en continu en direct, comprenant :
initialiser (S201), par un terminal de lecture, une fenêtre de retard qui est utilisée pour contraindre une plage de tranches de ressource obtenues à partir d'un terminal de serveur par le terminal de lecture, les tranches de ressource étant obtenues par découpe en tranches d'une ressource multimédia de diffusion en continu cible par le terminal de serveur ;
selon un numéro de départ et un dernier numéro des tranches de ressource dans la fenêtre de retard, demander (S204), par le terminal de lecture, une tranche de ressource non demandée de la ressource multimédia de diffusion en continu cible à partir du terminal de serveur à l'intérieur d'une plage de la fenêtre de retard ;
déterminer (S205), par le terminal de lecture, si un résultat d'une première demande pour la tranche de ressource à l'intérieur de la plage de la fenêtre de retard est ou non réussi ; et
accumuler (S206), par le terminal de lecture, un nombre d'échecs consécutifs de la première demande pour la tranche de ressource dans la fenêtre de retard et, lorsque le nombre d'échecs consécutifs atteint un seuil prédéfini, faire glisser (S207) la fenêtre de retard vers l'arrière, en diminuant le numéro de départ et le dernier numéro, afin de limiter une vitesse de demande du terminal de lecture.

2. Procédé pour une diffusion en continu en direct selon la revendication 1, dans lequel la détermination, par le terminal de lecture, du point de savoir si la première demande pour la tranche de ressource dans la fenêtre de retard est ou non réussie comprend :
configurer (S2051) un compteur pour accumuler le nombre d'échecs consécutifs de la première demande ;
obtenir (S2053) un code d'état de réponse de la première demande pour la tranche de ressource dans la fenêtre de retard ; et
sur la base du code d'état de réponse de la première demande pour la tranche de ressource, identifier (S2055) si la demande pour la tranche de ressource est ou non réussie.

3. Procédé pour une diffusion en continu en direct selon la revendication 2, dans lequel l'accumulation d'un nombre d'échecs consécutifs de la première demande pour la tranche de ressource dans la fenêtre de retard et, lorsque le nombre d'échecs consécutifs atteint un seuil prédéfini, le glissement de la fenêtre de retard vers l'arrière afin de limiter une vitesse de demande du terminal de lecture comprennent :
sur la base du code d'état de réponse de la première demande pour la tranche de ressource, identifier si la première demande pour la tranche de ressource est ou non réussie ;
lorsque le code d'état de réponse indique que la première demande a échoué, incrémenter (S2061) une valeur du compteur de un ;
demander de manière continue (S208 ; S2063) la tranche de ressource à l'intérieur de la plage de la fenêtre de retard pour accumuler le nombre d'échecs consécutifs de la première demande pour la tranche de ressource dans la fenêtre de retard ;
lorsque la valeur du compteur atteint le seuil prédéfini, faire glisser vers l'arrière la fenêtre de retard afin de limiter la vitesse de demande du terminal de lecture ; et
lorsque le code d'état de réponse indique que la première demande est réussie, régler (S2065) la valeur du compteur à zéro.

4. Procédé pour une diffusion en continu en direct selon la revendication 3, dans lequel le glissement de la fenêtre de retard vers l'arrière afin de limiter la vitesse de demande du terminal de lecture comprend :
faire glisser la fenêtre de retard vers l'arrière d'une unité de temps, en diminuant le numéro de départ et le dernier numéro de l'unité de temps ; et
régler la valeur du compteur à zéro.

5. Procédé pour une diffusion en continu en direct selon l'une quelconque des revendications 1 à 4, le procédé comprenant en outre, avant l'initialisation de la fenêtre de retard :
découper, par le terminal de serveur, la ressource multimédia de diffusion en continu cible selon un intervalle de temps d'une unité de temps dans les tranches de ressource ; et
numéroter, par le terminal de serveur, les tranches de ressource.

6. Procédé pour une diffusion en continu en direct selon la revendication 5, dans lequel la découpe, par le terminal de serveur, de la ressource multimédia de diffusion en continu cible et la numérotation des tranches de ressource comprennent en outre :
numéroter les tranches de ressource selon des estampilles temporelles respectives des tranches de ressource.

7. Procédé pour une diffusion en continu en direct selon la revendication 5, dans lequel l'initialisation, par un terminal de lecture, de la fenêtre de retard comprend :
obtenir un paramètre de retard ;
régler une taille de la fenêtre de retard selon le paramètre de retard ;
selon la taille de la fenêtre de retard, obtenir le numéro de départ et le dernier numéro des tranches de ressource à partir du terminal de serveur ; et
maintenir de manière périodique la fenêtre de retard pour augmenter le numéro de départ et le dernier numéro des tranches de ressource de manière synchrone.

8. Système de diffusion en continu en direct comprenant un terminal de lecture et un terminal de serveur, et comprenant en outre une unité de demande de ressource (305), une unité de détermination (306) et une unité d'accumulation de nombre d'échecs (307), et l'unité de demande de ressource, l'unité de détermination et l'unité d'accumulation de nombre d'échecs étant agencées au niveau du terminal de lecture, dans lequel :
l'unité de demande de ressource est configurée pour demander (S204) une tranche de ressource non demandée d'une ressource multimédia de diffusion en continu cible à partir du terminal de serveur dans une fenêtre de retard initialisée selon un numéro de départ et un dernier numéro des tranches de ressource à l'intérieur de la fenêtre de retard initialisée, la fenêtre de retard étant utilisée pour contraindre une plage des tranches de ressource obtenues à partir du terminal de serveur par le terminal de lecture, et les tranches de ressource étant obtenues par découpe de la ressource multimédia de diffusion en continu cible par le terminal de serveur ;
l'unité de détermination est configurée pour déterminer (S205) si un résultat d'une première demande pour la tranche de ressource à l'intérieur de la plage de la fenêtre de retard est ou non réussi ; et
l'unité d'accumulation de nombre d'échecs est configurée pour accumuler (S206) un nombre d'échecs consécutifs de la première demande pour la tranche de ressource dans la fenêtre de retard et, lorsque le nombre d'échecs atteint un seuil prédéfini, faire glisser (S207) la fenêtre de retard vers l'arrière en diminuant le numéro de départ et le dernier numéro, afin de limiter une vitesse de demande du terminal de lecture.

9. Système de diffusion en continu en direct selon la revendication 8, l'unité de détermination comprenant en outre :
un compteur configuré pour accumuler le nombre d'échecs consécutifs de la première demande ;
un module d'acquisition de code d'état configuré pour obtenir un code d'état de réponse de la première demande pour la tranche de ressource de la fenêtre de retard ; et
un module d'identification et de traitement de code d'état configuré pour, sur la base du code d'état de réponse de la première demande pour la tranche de ressource, identifier si la demande pour la tranche de ressource est ou non réussie, dans lequel :
lorsque le code d'état de réponse indique que la demande a échoué, la valeur du compteur est incrémentée de un ;
demander de manière continue la tranche de ressource à l'intérieur de la plage de la fenêtre de retard pour accumuler le nombre d'échecs consécutifs de la première demande pour la tranche de ressource dans la fenêtre de retard ;
lorsque la valeur du compteur atteint le seuil prédéfini, faire glisser vers l'arrière la fenêtre de retard afin de limiter la vitesse de demande du terminal de lecture ; et
lorsque le code d'état de réponse indique que la première demande est réussie, régler la valeur du compteur à zéro.

10. Système de diffusion en continu en direct selon la revendication 9, comprenant en outre
une unité de traitement de retard (308) configurée pour, lorsque la valeur du compteur atteint le seuil prédéfini, faire glisser vers l'arrière la fenêtre de retard d'une unité de temps, en diminuant le numéro de départ et le dernier numéro de l'unité de temps, et régler la valeur du compteur à zéro.

11. Système de diffusion en continu en direct selon la revendication 8, comprenant en outre :
une unité d'initialisation de fenêtre de retard (303) configurée pour initialiser la fenêtre de retard, dans lequel : l'unité d'initialisation de fenêtre de retard est configurée spécifiquement pour obtenir un paramètre de retard ; et pour régler une taille de la fenêtre de retard selon le paramètre de retard, selon la taille de la fenêtre de retard, le terminal de lecture est configuré pour obtenir le numéro de départ et le dernier numéro des tranches de ressource à partir du terminal de serveur, et une unité de maintenance de fenêtre de retard est configurée pour maintenir de manière périodique la fenêtre de retard pour augmenter le numéro de départ et le dernier numéro des tranches de ressource de manière synchrone.

12. Système de diffusion en continu en direct selon la revendication 8, comprenant en outre :
une unité de découpe (301) qui est agencée au niveau du terminal de serveur, et configurée pour découper la ressource multimédia de diffusion en continu cible selon un intervalle de temps d'une unité de temps dans les tranches de ressource.

13. Système de diffusion en continu en direct selon la revendication 12, comprenant en outre :
une unité de numérotation de tranches (302) qui est agencée au niveau du terminal de serveur, configurée pour numéroter les tranches de ressource selon des estampilles temporelles respectives des tranches de ressource.

14. Appareil de diffusion en continu en direct comprenant une unité de demande de ressource (305, 401), une unité de détermination (306, 402) et une unité d'accumulation de nombre d'échecs (307, 403), dans lequel,
l'unité de demande de ressource (305, 401) est configurée pour, selon un numéro de départ et un dernier numéro de tranches de ressource dans une fenêtre de retard initialisée, demander une tranche de ressource non demandée d'une ressource multimédia de diffusion en continu cible à partir d'un terminal de serveur dans la fenêtre de retard qui est utilisée pour contraindre une plage des tranches de ressource obtenues à partir du terminal de serveur par le terminal de lecture, les tranches de ressource étant obtenues par découpe de la ressource multimédia de diffusion en continu cible par le terminal de serveur ;
l'unité de détermination (306, 402) est configurée pour déterminer si un résultat d'une première demande pour la tranche de ressource à l'intérieur de la plage de la fenêtre de retard est ou non réussi ; et
l'unité d'accumulation de nombre d'échecs (307, 403) est configurée pour accumuler un nombre d'échecs consécutifs de la première demande pour la tranche de ressource dans la fenêtre de retard et, lorsque le nombre d'échecs consécutifs atteint un seuil prédéfini, faire glisser la fenêtre de retard vers l'arrière, en diminuant le numéro de départ et le dernier numéro, afin de limiter une vitesse de demande d'un terminal de lecture.

15. Appareil de diffusion en continu en direct selon la revendication 14, dans lequel l'appareil de diffusion en continu en direct est un terminal de lecture de diffusion en continu en direct.
